# EUROPEAN PATENT APPLICATION

(11) **EP 0 845 341 A1**
(43) Date of publication of application: **03.06.1998**
(21) Application number: 97120945.7
(22) Date of filing: 28.11.1997
(51) Int. Cl.: B29C 35/12, B29C 35/14

(54) **Method to vulcanize rubber articles or profiles and relative device**

(30) Priority: 02.12.1996 IT UD960231
(71) Applicant: Ilpea Gomma SpA, 33080 Orgenico S. di Zoppola (PN) (IT); Marin, Riccardo, 36065 Mussolente (VI) (IT)
(72) Inventor: Ghirardo, Gianni, 33170 Pordenone (IT); Marin, Riccardo, 36065 Mussolente (VI) (IT)
(74) Representative: Petraz, Gilberto Luigi

(57) **Abstract**

Method to vulcanise rubber articles or profiles (14, 114) obtained by means of compression inside a mould (13) or by means of injection or extrusion from an extruder (18) associated with a transport or supporting plane (20), the method providing that the article or profile (14, 114) to be vulcanised is subjected to the action of a variable electric field with a frequency of at least more than 1 MHz and suitable to take the temperature of the article or profile (14, 114) to a value at least equal to 140° while maintaining the walls of the mould (13) or the surface of the transport or supporting plane (20) substantially at ambient temperature.
Device for the vulcanisation of rubber articles or profiles (14, 114) obtained by means of compression inside a mould (13) or by means of injection or extrusion from an extruder (18), the device comprising at least a radio-frequency generator (16), associated with at least a pair of electrodes, suitable to generate a variable radio-frequency electric field acting on the article or profile (14, 114), the electric field having a frequency of at least more than 1 MHz and such as to take to at least 140°C the temperature of the rubber article or profile (14, 114) arranged inside the mould (13) or travelling on a transport or supporting plane (20).

## Description

This invention concerns a method to vulcanise rubber articles or profiles, and also the device which achieves the method, as set forth in the respective main claims.

The invention is applied in the production of rubber articles or profiles made of all types of rubber, such as SBR, natural rubber, NBR, peroxide rubber or foam rubber and other types; it provides considerable advantages at least in terms of production times and energy saving.

The invention is applied both in the vulcanisation of articles obtained by compression and also of continuous profiles obtained by injection and/or extrusion.

The vulcanisation of rubber is a process of chemical-physical transformation through which natural rubber loses its essentially plastic characteristics in order to acquire essentially elastic ones.

During this transformation, the linear bonds between the molecules of the rubber in its raw state take on the configuration of three-dimensional bonds following the formation of bridges between the individual macro-molecules in their reactive points In other words, there is a reticulation of the molecules.

This process of vulcanisation allows the rubber article to acquire a stability of size and defined mechanical characteristics, such as hardness, elasticity, resistance to traction and stretching to break point.

There are very many different techniques for the process of vulcanisation; of these, the most important and well-known are air vulcanisation, press vulcanisation, continuous vulcanisation.

Air vulcanisation and continuous vulcanisation, however, can only be applied to particular articles or profiles, such as for example those extruded through an extruder, which have already acquired the required shape.

Press vulcanisation is based on the principle that a particular amount of non-vulcanised mix is placed in a pre-heated metal mould and pressure is exerted thereon, so that the mix becomes soft and fills the cavity of the mould.

After a certain time, it becomes an elastic body, it is no longer thermoplastic, and it can be removed from the mould still hot.

Press vulcanisation can be achieved both in an open mould and in a closed mould, by injecting or transferring the rubber.

This system of press vulcanisation, though it is widely known and used, does however have the disadvantage that the heating planes of the mould must be taken to and maintained at extremely high temperatures, about 180÷200°C, using electric energy, steam or other source of heat.

This is because the mix must necessarily be heated in order to accelerate the process of reticulation which otherwise would take an extremely long time.

Heating the planes of the mould involves a long time to prepare for the process, a long time to cool down at the end of the cycle, high energy consumption and high levels of power used, also because so much is lost in the environment.

A further disadvantage in these methods, both in the case of articles obtained by compression in a mould and also by injection or extrusion, is that, since the heat is transferred to the article from the outside towards the inside, there is a risk of surface burns, and a lack of uniformity and homogeneity in the final article.

The state of the art also includes vulcanisation methods which use the emission of micro-waves applied to the article which is to be vulcanised.

This solution uses either ringing chambers inside which the article to be vulcanised is placed, or wave guide systems which include a localized outlet in correspondence with an article which is normally moving on a conveyor belt.

In the first solution, the micro-waves are emitted from the appropriate source and spread inside the ringing chamber, bouncing on the walls; in this way, only some of the micro-waves hit the article to be vulcanised, and this causes a considerable dispersion of the power delivered and therefore an increase in the time required for vulcanisation.

In the other solution, using wave guides, the micro-waves are applied only at various points and therefore are not distributed uniformly on the article to be vulcanised; this causes a lack of homogeneity and uniformity in the processing and therefore the final article is not of a satisfactory quality.

Using wave guides also involves considerable technical and operational problems; if the system is not perfectly sized and set, there may be problems in the wave reflection which can lead to the generator being damaged or even destroyed.

Moreover, by its very nature, the generated power of the micro-waves must necessarily be dissipated, either on the article to be vulcanised or elsewhere, and therefore it is inevitable that the generation systems are over-sized and the yield rather low.

The present applicants have designed, tested and embodied this invention to overcome the shortcomings of the state of the art to provide a simple, economic, versatile and efficient solution.

The invention is set forth and characterised in the respective main claims, while the dependent claims describe variants of the idea of the main embodiment.

The purpose of the invention is to provide a method to vulcanise rubber articles, according to the press vulcanisation technology, which will eliminate the problem of heating the walls of the mould wherein the mix to be vulcanised is inserted.

According to a variant, the vulcanisation process is performed in air on profiles obtained by extrusion from an extruder.

Another purpose of the invention is to obtain a method of vulcanisation which will reduce the times of the process and which requires extremely limited power.

According to the invention, once the mix or article to be vulcanised has been placed inside the mould maintained at ambient temperature, it is subjected to the action of a variable radio-frequency electric field.

The action of this field causes heating to be produced on the material directly from its interior, which obviates the need to transfer the heat from outside.

Moreover, the heating is achieved in much shorter times and with a much more limited power compared with methods known to the state of the art.

In fact, the heating affects only the polar molecules of the rubber, that is to say, those which have electrically positive polarities on one side and electrically negative polarities on the opposite side, and therefore vary their spatial position with the same frequency of the electrical field applied.

In the case when the molecules of the article to be vulcanised have a low, or even nil, polarity, the article may be subjected to a polarisation of the molecules, for example by adding polarising additives.

The rubber can be introduced inside the closed mould either by injection or by transfer.

The method according to the invention also obviates the problems of a deterioration in the surface quality which are caused by the contact between one heated surface and the faces of the article to be vulcanised.

Since the planes of the mould are made of steel and therefore transparent to the radio-frequencies, their heating is reduced to a minimum; this method is therefore particularly efficacious in the case when there are metallic inserts arranged inside or outside the rubber article.

In this case, the two planes of the mould, connected to electrodes of opposite polarity, must necessarily be separated by an intermediate insulating plane so that they do not act as conductors, so that the electric field is generated through the planes themselves, and not through the metallic parts associated with the rubber article.

A further advantage of the invention is that, during the injection step, it is not necessary to include a heat-adjustment chamber since the rubber article is not heated except when it is inside the action of the variable electric field.

The invention is applied also in the case of thermoforming and extrusion of articles which have polar molecules and which can therefore be subjected to a process of radio-frequency heating.

In the case of an extruded profile, according to the invention, vulcanisation is performed in air, making the extruded profile interact with the electrodes which generate the radio-frequency electric field; these electrodes can be arranged, for example, on opposite sides of the transport or supporting plane of the article, or at the side of the extruded profile passing through.

The invention also obtains a saving in terms of power required, for example compared with using micro-waves; in fact, absorption only occurs when the electric field actually affects the article or the profile to be vulcanised, that is, only for the time when the article or the profile is between the electrodes.

Therefore, all the power delivered is transmitted directly to the article or the profile and the dispersion is minimal.

The attached Figures are given as a non-restrictive example, and show two preferential embodiments of the invention as follows:
- Fig. 1: shows schematically a device suitable to achieve the method of press vulcanisation according to the invention;
- Fig. 2: shows schematically a device suitable to achieve the method to vulcanise an extruded profile according to the invention.

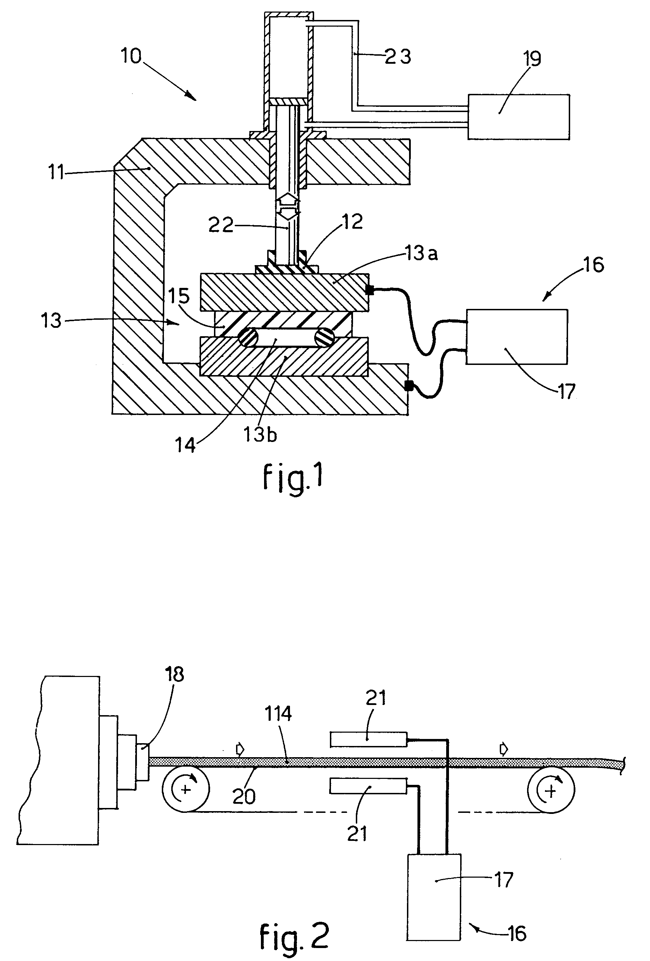

In Fig. 1, the vulcanisation device 10 comprises a mechanical press 11, of which the upper and lower planes cooperate with the upper wall 13a and the lower wall 13b of the mould 13 which contains the rubber article 14, in this case toric in section, which is to be vulcanised.

In this case, the mould 13 has an intermediate insulating layer 15, such as for example teflon, placed directly in contact with the rubber article 14.

The device 10 also comprises a radio-frequency generator 16 consisting, in this case, of a power triode 17 suitable to generate a variable electric field with a high frequency, at least more than 1 MHz, between the two electrically insulated walls 13a and 13b of the mould 13. The insulating layer 15 may also be charged, for example with fibre glass, in order to increase its mechanical characteristics.

There is also a hydraulic plant 19 associated with the mechanical press 11, which maintains the mould 13 closed and under pressure in order to contrast the thrust exerted by the rubber which dilates thermally due to the radio-frequency heating or inner causes of swelling.

The mechanical press 11 comprises a pressing element 22, activated by the hydraulic plant 19 by means of the connectors 23 and electrically insulated from the upper wall 13a of the mould 13 by means of a layer 12.

The variable electric field is generated between the two electrically insulated electrodes, in this case consisting of the structure of the mechanical press 11 and the upper wall 13a of the mould 13.

With this embodiment, it has been shown in experiments that the vulcanisation of a rubber article, such as that referenced in the Figure by the number 14, is achieved in a very limited time, about 3÷4 minutes, using a polarisation tension of about 5OOO-6000 V and a frequency of between 25 and 30 MHz, advantageously about 27 MHz.

Moreover, it has been found that in such conditions the rubber article 14 reaches a temperature of at least 140°C, advantageously about 160÷170°C, in an extremely short time, while the mould 13 and the insulating layer 15 made of teflon remain substantially at ambient temperature.

In the case shown in Fig. 1, the vulcanisation is the compression type; however, results are the same in the case of injection vulcanisation and, more simply, using extrusion, by making the extruded profile pass between two electrodes.

In this case, as shown schematically in Fig. 2, the continuous profile 114 leaving the mouth 18 of the extruder and deposited on a transport or supporting plane 20, is subjected to the action of two electrodes 21, fed by the power triode 17, which generate the variable radio-frequency electric field.

In the case shown here, the electrodes 21 are arranged on opposite sides of the transport or supporting plane 20, made of material which is transparent to radio-frequencies and therefore, in practice, it does not heat up.

## Claims

1. Method to vulcanise rubber articles or profiles (14,114) obtained by means of compression inside a mould (13) or by means of injection or extrusion from an extruder (18) associated with a transport or supporting plane (20), the method being characterised in that the article or profile (14, 114) to be vulcanised is subjected to the action of a variable electric field with a frequency of at least more than MHz and suitable to take the temperature of the article or profile (14, 114) to a value at least equal to 140°C while maintaining the walls of the mould (13) or the surface of the transport or supporting plane (20) substantially at ambient temperature.

2. Method as in Claim 1, in which the frequency of the electric field is between about 25 and about 30 MHz, advantageously 27 MHz.

3. Method as in Claim 1 or 2, in which the vulcanisation is performed in a closed mould (13) and the rubber is introduced by means of injection.

4. Method as in Claim 1 or 2, in which the vulcanisation is performed in a closed mould (13) and the rubber is introduced by means of transfer.

5. Method as in Claim 1 or 2, in which the vulcanisation is performed in air on an extruded profile (114) associated with a transport or supporting plane (20).

6. Method as in any claim hereinbefore, in which the rubber used is natural, SBR, NBR, peroxide, sponge and other rubbers of similar type.

7. Method as in any claim hereinbefore, in which the rubber article or profile (14, 114) to be vulcanised has metallic inserts either inside or outside.

8. Method as in Claim 1, which may be applied to thermoplastic materials or similar including polar or polarisable molecules.

9. Device for the vulcanisation of rubber articles or profiles (14,114) obtained by means of compression inside a mould (13) or by means of injection or extrusion from an extruder (18), the device being characterised in that it comprises at least a radio-frequency generator (16), associated with at least a pair of electrodes, suitable to generate a variable radio-frequency electric field acting on the article or profile (14, 114), the electric field having a frequency of at least more than 1 MHz and such as to take to at least 140°C the temperature of the rubber article or profile (14, 114) arranged inside the mould (13) or travelling on a transport or supporting plane (20).

10. Device as in Claim 9, in which, in the case of press vulcanisation, the walls of the mould (13) are electrically connected to the radio-frequency generator (16).

11. Device as in Claim 10, in which between the walls of the mould (13) and the rubber article (14) to be vulcanised there is at least a layer of insulating material (15) transparent to radio-frequencies.

12. Device as in Claim 10 or 11, which comprises mechanical compression means (11) associated with the walls of the mould (13).

13. Device as in Claim 9, which, in the case of vulcanisation in air on profiles (114) obtained by means of extrusion from an extruder (18), comprises electrodes (21) connected to the radio-frequency generator (16) and arranged on opposite sides of the profile (114).

14. Device as in Claim 9 or 13, in which the transport or supporting plane (20) is made of a material which is transparent to radio-frequencies.
